# EUROPÄISCHE PATENTSCHRIFT

(11) **EP 3 058 146 B1**
(45) Veröffentlichungstag und Bekanntmachung des Hinweises auf die Patenterteilung: **05.12.2018**
(21) Anmeldenummer: 14784472.4
(22) Anmeldetag: 16.10.2014
(51) Int. Cl.: E03F 5/22

(54) **VERFAHREN ZUM ERSTELLEN EINER ABWASSERHEBEANLAGE IN EINEM ABWASSERSCHACHT SOWIE ZUGEHÖRIGE ABWASSERHEBEANLAGE**
METHOD FOR SETTING UP A WASTEWATER PUMPING STATION IN A WASTEWATER SHAFT, AND ASSOCIATED WASTEWATER PUMPING STATION
PROCÉDÉ DE CONSTRUCTION D'UNE INSTALLATION DE RELEVAGE D'EAUX USÉES DANS UN PUITS D'ÉGOUT ET INSTALLATION DE RELEVAGE D'EAUX USÉES CORRESPONDANTE

(30) Priorität: 17.10.2013 DE 102013221065
(43) Veröffentlichungstag der Anmeldung: 24.08.2016
(73) Patentinhaber: KSB SE & Co. KGaA, 67227 Frankenthal (DE)
(72) Erfinder: BECKER, Michael, 67227 Frankenthal (DE); LÜDEMANN, Sebastian, 67227 Frankenthal (DE)
(86) Internationale Anmeldenummer: PCT/EP2014/072177
(87) Internationale Veröffentlichungsnummer: WO 2015/055749

(56) Entgegenhaltungen:
- EP-A1- 1 108 822
- EP-A1- 2 581 508
- CH-A- 526 689
- DE-B- 1 038 996
- DE-U1-202010 001 472
- DE-U1-202011 004 561
- US-A- 2 401 254
- US-A- 2 760 512
- US-A- 3 394 656

## Beschreibung

Die Erfindung betrifft ein Verfahren zum Erstellen einer Abwasserhebeanlage in einem Abwasserschacht, wonach wenigstens ein Sperrstoff-Sammelbehälter für hierdurch geführtes und mit Sperrstoffen belastetes Abwasser, ein Flüssigkeits-Sammelbehälter für das von Sperrstoffen befreite und in dem Sperrstoff-Sammelbehälter vorgereinigte Abwasser und eine dem Sperrstoff-Sammelbehälter zugeordnete Pumpe zur Entleerung des Flüssigkeits-Sammelbehälters über den Sperrstoff-Sammelbehälter als meistens jeweils getrennte Baugruppen hergestellt werden.

Das heißt, der Sperrstoff-Sammelbehälter, der Flüssigkeits-Sammelbehälter und die Pumpe können als drei getrennte Baugruppen produziert werden. Es ist aber auch möglich, beispielsweise die Pumpe und den Sperrstoff-Sammelbehälter zu einer Baugruppe zusammenzufassen. Dann sind mit dem Flüssigkeits-Sammelbehälter als weitere Baugruppe insgesamt zwei Baugruppen realisiert.

Abwasserhebeanlagen werden im Allgemeinen in einen Abwasserschacht eingebaut und dazu genutzt, endseitig eines Abwasserstauraumes gesammeltes Abwasser auf ein bestimmtes Niveau zu heben. Im Anschluss hieran erfolgt dann meistens eine Weiterbehandlung in einer Abwasserreinigungsanlage. Zu diesem Zweck sind in der Praxis oftmals große Pumpen eingesetzt worden, die jedoch vom Wirkungsgrad her nicht überzeugen.

Bei dem gattungsbildenden Verfahren nach der EP 1 108 822 A1 wird mit einer Abwasserhebeanlage gearbeitet, bei welcher Feststoffe von dem Fördermedium, in der Regel dem Abwasser, getrennt werden. Erst im Anschluss hieran tritt das solchermaßen vorgereinigte Abwasser in eine regelmäßig eingesetzte Pumpe ein. Für die beschriebene Trennung der Feststoffe vom Abwasser sorgt der der Pumpe vorgeschaltete Sperrstoff-Sammelbehälter. Zu diesem Zweck ist im Innern des Sperrstoff-Sammelbehälters typischerweise ein Trennsieb vorgesehen, mit dessen Hilfe idealerweise die Sperrstoffe zurückgehalten werden. Dadurch verlässt vorgereinigtes Abwasser den Sperrstoff-Sammelbehälter und lässt sich in den dem Sperrstoff-Sammelbehälter nachgeschalteten Flüssigkeits-Sammelbehälter überführen.

Bei den in der Praxis realisierten Abwasserhebeanlagen wird im Allgemeinen so vorgegangen, dass der Abwasserschacht, der Sperrstoff-Sammelbehälter, der Flüssigkeits-Sammelbehälter und die Pumpe insgesamt vorgefertigt und am Einbauort verbaut werden. Zu diesem Zweck schlägt die EP 1 108 822 A1 in einer Variante vor, dass der Flüssigkeits-Sammelbehälter und der die Abwasserhebeanlage aufnehmende Abwasserschacht aus Kunststoff gefertigt sind, wobei der Schachtboden gleichzeitig den Boden des Flüssigkeits-Sammelbehälters bildet. Auf diese Weise kann eine industrielle Vorfertigung der gesamten Abwasserhebeanlage realisiert werden, was den Einbau vor Ort erleichtert.

Allerdings sind Abwasserschächte aus Kunststoff oftmals den vor Ort herrschenden statischen und dynamischen Belastungen nicht oder nicht dauerhaft gewachsen. Aus diesem Grund arbeitet man in diesem Kontext zunehmend mit Abwasserschächten aus Beton. Das impliziert eine Fertigung des Abwasserschachtes vor dem Einbau der eigentlichen Abwasserhebeanlage, weil sich der Transport von Abwasserschächten aus Beton letztlich aus Kostengründen verbietet. In diesem Zusammenhang schlägt die EP 1 108 822 A1 bereits vor, dass der Sperrstoff-Sammelbehälter und der Flüssigkeits-Sammelbehälter als voneinander getrennte Baugruppen unter Darstellung einer modularen Baueinheit ausgeführt werden können.

Solche getrennten Baugruppen bieten wartungs- und konstruktionstechnische Vorteile, weil Wartungsarbeiten und auch Reparaturarbeiten an den vorgenannten Bauelementen im vorhandenen Abwasserschacht getrennt voneinander vorgenommen werden können. Das hat sich grundsätzlich bewährt.

Allerdings ist die Handhabung der Bauteile für die Abwasserhebeanlage insbesondere beim Transport über große Strecken verbesserungsbedürftig. Denn einzelne Bestandteile der Abwasserhebeanlage wie insbesondere der Flüssigkeits-Sammelbehälter sind besonders voluminös und schwer. Das gilt erst recht, wenn wie im weiteren Stand der Technik nach der DE 33 33 883 A1 mit einem Behälter für eine Abwasserpumpstation zur Aufnahme einer Pumpe gearbeitet wird, der aus Beton hergestellt ist. Dadurch soll eine werksmäßige Serienfertigung ermöglicht werden. Allerdings sind die beobachteten Volumina und Gewichte exorbitant, so dass die bekannten Behälter praktisch nicht über große Strecken transportiert werden können.

Vor einem vergleichbaren Problem steht auch die durch die nächstliegende CH 526 689 A bekannt gewordene Anlage zur Förderung und Beseitigung häuslicher und gewerblicher Abwässer. Denn an dieser Stelle wird mit einem in einem Sammelbehälter bzw. Flüssigkeits-Sammelbehälter angeordneten Fülltrichter, einem Spülbehälter bzw. Sperrstoff-Sammelbehälter mit Druckrohranschluss und einer Kreiselpumpe sowie einer Abscheideeinrichtung gearbeitet. Hierdurch soll zwar der Montageaufwand beim Einbau in einen Sammelbehälter bzw. Abwasserschacht bei einfacher Fertigungsweise verringert sein. Allerdings wird der Flüssigkeits-Sammelbehälter unverändert als zwingender Bestandteil benötigt, so dass nach wie vor die Handhabung und der Transport über große Strecken insbesondere bei großen Anlagen problematisch sind.

Vor vergleichbaren Problemen steht auch die Abwasserhebeanlage nach der EP 2 581 508 A1. Hier ist eine Filtervorrichtung außerhalb eines Gehäuses für die Abwasseranlage vorgesehen, wodurch eventuelle Reparatur- oder Wartungsarbeiten erleichtert werden sollen.

Bei der DE 20 2011 004 561 U1 geht es um eine Abwasserhebeanlage, bei welcher alle Bauteile mit Ausnahme des Motors Formteile aus Kunststoff sind. Dadurch soll ein leichter Transport sowie eine einfache manuelle Handhabung bei der Installation zur Verfügung gestellt werden.

Im Rahmen der US 2 401 254 A geht es um eine Abwasserhebeanlage, die insgesamt einen Flüssigkeits-Sammelbehälter als gleichsam Montagegerüst benötigt.

Was die Abwasserhebeanlage nach der US 3 394 656 A angeht, sind erneut ein Sperrstoff-Sammelbehälter und eine zugehörige Pumpe im Innern eines Flüssigkeits-Sammelbehälters angeordnet.

Bei dem Gebrauchsmuster DE 20 2010 001 472 U1 steht eine Abwasserhebeanlage im Fokus, bei welcher der Flüssigkeits-Sammelbehälter im Abwasserschacht als dessen teilweiser Bestandteil ausgebildet ist. Dadurch sollen insgesamt die Investitionskosten verringert werden.

Im schließlich noch zu nennenden und nächstkommenden Stand der Technik nach der US 2 760 512 A wird eine Abwasserhebeanlage beschrieben, die herkömmlich in einem Abwasserschacht angeordnet wird. Insofern werden auch ein Nass- und Trockenbereich beobachtet. Allerdings findet sich eine dortige Schnittstelle mit Abstand vor einer zugehörigen Trennwand. Das ist beim Einbau von Pumpe und Sperrstoff-Sammelbehälter durch von der Wand vorstehende Rohrabschnitte problematisch. Hier will die Erfindung Abhilfe schaffen.

Der Erfindung liegt das technische Problem zugrunde, ein derartiges Verfahren zum Erstellen einer Abwasserhebeanlage in einem Abwasserschacht so weiter zu entwickeln, dass eine deutliche Kostenreduktion insbesondere für den Transport beobachtet wird und zugleich die Erstellung von Neuanlagen sowie die Sanierung von Altanlagen problemlos möglich wird.

Zur Lösung dieser technischen Problemstellung ist ein Verfahren mit den Merkmalen des Anspruches 1 vorgesehen.

Im Rahmen der Erfindung wird also bewusst eine Trennung der Abwasserhebeanlage in bauseitig vorhandene Bestandteile und herstellerseitig vorgefertigte Bestandteile vorgenommen. Zu den bauseitig vorhandenen Bestandteilen gehört dabei nicht nur der Abwasserschacht, wie dies in der Praxis bereits propagiert und im Stand der Technik beschrieben wird. Sondern zu diesen bauseitig vorhandenen Bestandteilen gehört erfindungsgemäß zusätzlich noch der Flüssigkeits-Sammelbehälter.

Selbstverständlich können auch mehrere Flüssigkeits-Sammelbehälter im Abwasserschacht bei Bedarf vorhanden sein oder bauseitig realisiert werden. Außerdem liegt es im Rahmen der Erfindung, beispielsweise mehrere Baueinheiten jeweils aus dem Sperrstoff-Sammelbehälter und der Pumpe mit einem Flüssigkeits-Sammelbehälter oder auch mehreren dieser Flüssigkeits-Sammelbehälter wie beschrieben zu vereinigen. Dadurch lässt sich ein paralleler Betrieb von beispielsweise zwei Baueinheiten realisieren, um insgesamt Druck- und/oder Mengenerhöhungen zu erreichen. Darüber hinaus kann auch beispielsweise ein Sperrstoff-Sammelbehälter mit zwei oder mehr Pumpen ebenso wie mehrere Sperrstoff-Sammelbehälter mit einer Pumpe zur vorgefertigten Baueinheit herstellerseitig zusammengefasst werden. In jedem Fall verringern sich die Transportkosten signifikant, weil die Flüssigkeits-Sammelbehälter typischerweise voluminös und schwer ausgelegt sind und erfindungsgemäß bauseitig bereits realisiert sind.

Hinzu kommt, dass etwaige Probleme mit der Druckfestigkeit des Flüssigkeits-Sammelbehälters oder auch Anpassungen vor Ort beim Einbau des Flüssigkeits-Sammelbehälters entfallen. Im Übrigen sind die Investitionskosten reduziert bzw. lassen sich zeitlich und funktionell aufteilen. Hinzu kommt, dass nach dem beschriebenen Verfahren sowohl Altanlagen saniert als auch Neuanlagen hergestellt werden können.

Denn dazu muss lediglich die Baueinheit an den Flüssigkeits-Sammelbehälter angepasst werden.

Durch die Trennung zwischen den bauseitig vorhandenen Bestandteilen und den (herstellerseitig) vorgefertigten Bestandteilen bei der Realisierung der erfindungsgemäßen Abwasserhebeanlage muss letztlich mit der einen oder den mehreren Schnittstellen gearbeitet werden. Hier ist im Rahmen der Erfindung vorgesehen, dass die Baueinheit aus zumindest dem Sperrstoff-Sammelbehälter und der wenigstens einen Pumpe einerseits und der Flüssigkeits-Sammelbehälter andererseits über die wenigstens eine Schnittstelle miteinander bauseitig gekoppelt werden. Die Schnittstelle ist erfindungsgemäß in der Trennwand angebracht.

Die angesprochene Trennwand ist im Abwasserschacht angeordnet. Mit Hilfe der Trennwand wird der Abwasserschacht in einen Trockenraum und einen Nassraum unterteilt. Im Trockenraum wird typischerweise die Baueinheit aus dem Sperrstoff-Sammelbehälter und der Pumpe platziert. Demgegenüber fungiert der Nassraum zur Aufnahme des dort vorgesehen Flüssigkeits-Sammelbehälters.

Da die Baueinheit aus wenigstens dem Sperrstoff-Sammelbehälter und der Pumpe im Rahmen der Erfindung besonders kompakt aufgebaut ist, lassen sich Transportkosten verringern und kann mit einem gegenüber dem Stand der Technik deutlich reduzierten Transportvolumen gearbeitet werden. Das setzt zugleich voraus, dass der Flüssigkeits-Sammelbehälter bauseitig nach entsprechenden Vorgaben im Innern des Abwasserschachtes hergestellt wird und insbesondere die Schnittstelle zwischen der Baueinheit und dem Flüssigkeits-Sammelbehälter ihrer Funktion nachkommt und auch nachkommen kann. Tatsächlich handelt es sich bei der Schnittstelle erfindungsgemäß um eine Rohrkupplung. Denn mit Hilfe der Schnittstelle wird im Regelfall die Pumpe saugseitig an den Flüssigkeits-Sammelbehälter angeschlossen.

Dabei besteht darüber hinaus noch die Möglichkeit, einen Zulauf für die Baueinheit durch den Flüssigkeits-Sammelbehälter hindurchzuführen. Über diesen Zulauf wird das zu hebende Abwasser dem Sperrstoff-Sammelbehälter zugeführt. Da der Zulauf folglich zweckmäßig durch den Flüssigkeits-Sammelbehälter hindurchgeführt wird und auch durch die Trennwand im Innern des Abwasserschachtes muss an dieser Stelle erneut mit einer Schnittstelle zum betreffenden Sperrstoff-Sammelbehälter gearbeitet werden.

Infolge dieser Auslegung besteht die Möglichkeit, den Abwasserschacht kompakter und mit geringerer Schachthöhe als bisher auszulegen. Denn durch die niedrige Höhe des durch den Flüssigkeits-Sammelbehälter hindurchgeführten Zulaufes im Vergleich zum Stand der Technik, bei dem der Zulauf oberhalb des Flüssigkeits-Sammelbehälters angeordnet ist, kann das vorhandene Volumen im Abwasserschacht optimal genutzt werden.

Ferner eröffnet die direkte Anbringung und Anordnung des Flüssigkeits-Sammelbehälters im Abwasserschacht die Möglichkeit, dass die Bauhöhe der Baueinheit aus dem Sperrstoff-Sammelbehälter und der Pumpe weiter reduziert wird. Denn eine Verbindungsleitung von der Pumpe zum Sperrstoff-Sammelbehälter und eine als Bypass ausgeführte Ableitung können in den Sperrstoff-Sammelbehälter integriert werden. Die Auslegung mag dabei vergleichbar derjenigen sein, wie sie in der WO 2010/025852 A1 bereits beschrieben wird.

Erfindungsgemäß ist der Flüssigkeits-Sammelbehälter bauseitig in den Abwasserschacht integriert. Das heißt, bei der bauseitigen Herstellung von einerseits dem Abwasserschacht und andererseits dem Flüssigkeits-Sammelbehälter wird so vorgegangen, dass der Flüssigkeits-Sammelbehälter als Teil oder Bestandteil des Abwasserschachtes ausgelegt wird. In diesem Zusammenhang empfiehlt es sich, wenn der Flüssigkeits-Sammelbehälter und der Abwasserschacht größtenteils materialeinheitlich hergestellt werden.

Tatsächlich korrespondiert eine solche Auslegung meistens dazu, dass der Flüssigkeits-Sammelbehälter und der Abwasserschacht mehrere gemeinsame Wandungen aufweisen. Beispielsweise kann der Flüssigkeits-Sammelbehälter im Innern des Abwasserschachtes durch die bereits angesprochene Trennwand definiert werden, so dass der Flüssigkeits-Sammelbehälter lediglich einen Teil des Bodens des Abwasserschachtes bedeckt. Der Flüssigkeits-Sammelbehälter wird folglich als offene Wanne im Abwasserschacht definiert, die durch eine entfernbare Abdeckung kopfseitig verschlossen werden kann.

Auf diese Weise kommt die Trennwand ihrer teilenden Funktion gleichsam automatisch zu. Denn im Bereich des Flüssigkeits-Sammelbehälters wird der Nassraum definiert, wohingegen jenseits des Nassraumes und der Trennwand der Trockenraum zur Anordnung der Baueinheit zur Verfügung steht. Das heißt, im Trockenraum finden sich der modular aufgebaute Sperrstoff-Sammelbehälter und auch die wenigstens eine Pumpe, die folglich besonders einfach für Wartungs- und Reinigungszwecke zugänglich sind, und zwar sogar bei laufendem Betrieb.

Die Baueinheit aus wenigstens dem Sperrstoff-Sammelbehälter und der Pumpe kann aus verschiedenen Materialien hergestellt werden. Hier haben sich Metall, Kunststoff und sogar Beton als möglich erwiesen, wobei auch Kombinationen mit abgedeckt sind. Vergleichbare Materialien können auch für den Abwasserschacht sowie gegebenenfalls den Flüssigkeits-Sammelbehälter Verwendung finden. Das heißt, auch in diesem Fall kann mit Beton, Metall, Kunststoff oder Kombinationen gearbeitet werden.

Im Ergebnis werden ein Verfahren zur Errichtung bzw. zum Erstellen einer Abwasserhebeanlage im Abwasserschacht und eine zugehörige Abwasserhebeanlage beschrieben, die besondere Vorteile in kostenmäßiger und logistischer Hinsicht eröffnen. Denn durch den modularen Aufbau einzelner Bestandteile und die Trennung in bauseitig vorhandene Bestandteile und (herstellerseitig) vorgefertigte Bestandteile besteht nicht nur die Möglichkeit, Neuanlagen entsprechend auszurüsten, sondern gelingt auch die Sanierung von Altanlagen besonders vorteilhaft. Denn hierbei kommt es lediglich darauf an, den Abwasserschacht in Verbindung mit dem Flüssigkeits-Sammelbehälter bauseitig zur Verfügung zu stellen. Außerdem muss die wenigstens eine Schnittstelle zwischen dem Flüssigkeits-Sammelbehälter und dem zumindest einen Sperrstoff-Sammelbehälter den Vorgaben entsprechen.

Dadurch, dass der Flüssigkeits-Sammelbehälter bauseitig vorhanden ist bzw. bauseitig realisiert wird, bevor die Baueinheit aus dem Sperrstoff-Sammelbehälter und der Pumpe in den Abwasserschacht eingebaut wird, besteht die Möglichkeit, den Zulauf für die Baueinheit durch den Flüssigkeits-Sammelbehälter hindurchzuführen und ebenfalls bauseitig bereits zu realisieren. In diesem Fall ist dann noch eine zusätzliche weitere Schnittstelle zwischen dem Zulauf einerseits und dem Sperrstoff-Sammelbehälter andererseits erforderlich, an welchen der Zulauf angeschlossen wird. Dadurch lassen sich niedrige Zulaufhöhen realisieren und kann insgesamt die Abwasserhebeanlage besonders kompakt ausgelegt sowie die Schachthöhe des Abwasserschachtes auf ein Minimum reduziert werden.

Als weiterer Vorteil ist zu nennen, dass durch den kompakten Aufbau auch mit wenigen Einzelteilen und kleinen Einbauöffnungen im Abwasserschacht gearbeitet werden kann, was die Kosten weiter reduziert. Zugleich sind Reparatur und Wartung vereinfacht. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Abwasserhebeanlage perspektivisch,
- Fig. 2: einen Längsschnitt durch die Fig. 1,
- Fig. 3: eine Aufsicht auf den Gegenstand nach den Fig. 1 und 2 und
- Fig. 4 bis 6: die Abwasserhebeanlage nach den Fig. 1 bis 3, eingebaut in einen Abwasserschacht in drei verschiedenen Varianten, wobei die Varianten nach den Figuren 4 und 6 nicht zur Erfindung gehören und lediglich der Verdeutlichung dienen.

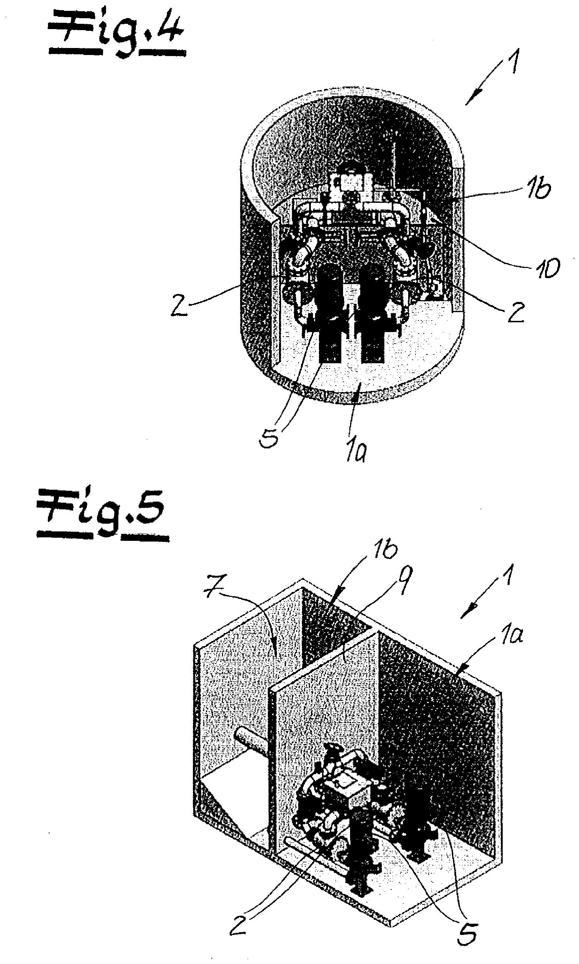

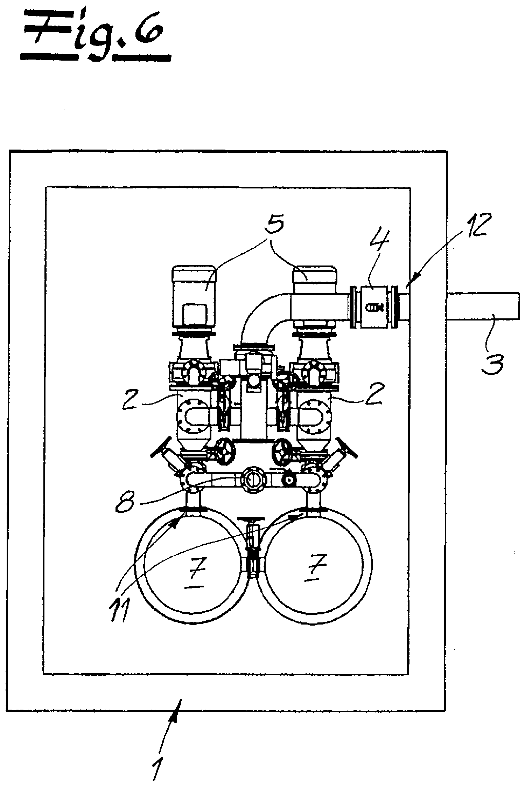

In den Figuren ist eine Abwasserhebeanlage dargestellt, die in einen Abwasserschacht 1 eingebaut wird bzw. eingebaut werden kann. Anhand der Ausführungsbeispiele nach den Fig. 4 und 5 erkennt man, dass der Abwasserschacht 1 zylindrisch ausgeführt sein mag (Fig. 4) oder auch die Form eines Quaders besitzen kann (Fig. 5 und 6). In den sämtlichen Fällen ist der Abwasserschacht 1 aus Beton gefertigt.

Die Abwasserhebeanlage verfügt in ihrem grundsätzlichen Aufbau über einen Sperrstoff-Sammelbehälter 2. Nach dem Ausführungsbeispiel sind zwei Sperrstoff-Sammelbehälter 2 realisiert, die im Wechsel betrieben werden können, wie dies grundsätzlich in der gattungsbildenden EP 1 108 822 A1 beschrieben wird. Mit Hilfe der Sperrstoff-Sammelbehälter 2 werden im Abwasser befindliche Sperrstoffe zurückgehalten. Zu diesem Zweck wird das mit Sperrstoffen belastete Abwasser über einen Zulauf bzw. eine Zulaufleitung 3 und einen Verteiler 4 den beiden Sperrstoff-Sammelbehältern 2 zugeführt.

Im Innern des jeweiligen Sperrstoff-Sammelbehälters 2 sorgt typischerweise ein Trennsieb dafür, dass die Sperrstoffe zurückgehalten werden und lediglich vorgereinigtes Abwasser über eine dem Sperrstoff-Sammelbehälter 2 zugeordnete Pumpe 5 und eine Saugleitung 6 schließlich in einen Flüssigkeits-Sammelbehälter 7 gelangt. Sobald das im Flüssigkeits-Sammelbehälter 7 gespeicherte und vorgereinigte Abwasser ein bestimmtes Niveau erreicht hat, wird die Pumpe 5 eingeschaltet und saugt das vorgereinigte Abwasser über die Saugleitung 6 an. Die Pumpe 5 führt das Abwasser dann weiter über den Sperrstoff-Sammelbehälter 2 unter dortiger Mitnahme der Sperrstoffe zu einer Druckleitung 8, von wo aus das solchermaßen angehobene Abwasser beispielsweise einer Abwasserreinigungsanlage zur weiteren Behandlung zugeführt wird. Das ist prinzipiell bekannt, wozu nicht nur auf die EP 1 108 822 A1 sondern auch auf die WO 2010/025852 A1 der Anmelderin verwiesen sei.

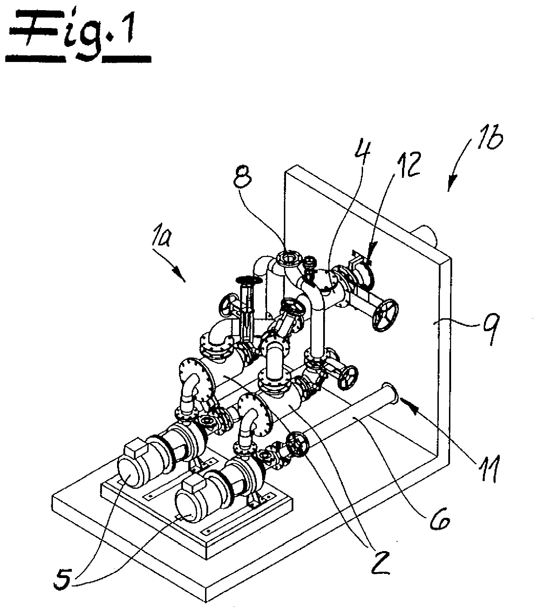

Der Flüssigkeits-Sammelbehälter 7 und die Pumpe bzw. die beiden Pumpen 5 sind als jeweils getrennt hergestellte Baugruppen ausgebildet. Außerdem definieren erfindungsgemäß wenigstens der Sperrstoff-Sammelbehälter 2 bzw. die beiden Sperrstoff-Sammelbehälter 2 und die Pumpe 5 eine vorgefertigte Baueinheit 2, 4, 5, 6, 8, zu welcher im Ausführungsbeispiel und nicht einschränkend noch der Verteiler 4, die Saugleitung 6 und die Druckleitung 8 hinzutreten. Diese Baueinheit 2, 4, 5, 6, 8 erkennt man insbesondere in der Fig. 1.

Die betreffende und beispielsweise herstellerseitig oder werkseitig vorgefertigte Baueinheit 2, 4, 5, 6, 8 wird mit dem bauseitig bereits vorhandenen Flüssigkeits-Sammelbehälter 7 im Zuge des Einbaus der Baueinheit 2, 4, 5, 6, 8 in den ebenfalls bauseitig bereits vorhandenen Abwasserschacht 1 vereinigt. Dabei ist der Flüssigkeits-Sammelbehälter 7 bauseitig in den Abwasserschacht 1 integriert worden.

Zu diesem Zweck werden der Flüssigkeits-Sammelbehälter 7 und der Abwasserschacht 1 im Ausführungsbeispiel größtenteils materialeinheitlich hergestellt. Das gilt jedenfalls für die beiden Ausführungsvarianten nach den Fig. 4 und 5. Tatsächlich ist dort die Auslegung so getroffen, dass der Abwasserschacht 1 mit Hilfe einer Trennwand 9 in einen Trockenraum 1a und einen Nassraum 1b unterteilt wird. Im Trockenraum 1a findet sich die Baueinheit 2, 4, 5, 6, 8.

Dagegen nimmt der Nassraum 1b den dort vorgesehenen Flüssigkeits-Sammelbehälter 7 auf bzw. fallen der Nassraum 1b und der Flüssigkeits-Sammelbehälter 7 zusammen. Denn mit Hilfe der Trennwand 9 (aus Beton) wird in dem (ebenfalls aus Beton hergestellten) Abwasserschacht 1 eine nach oben hin offene Wanne definiert, die mit einer entfernbaren Abdeckung 10 aus beispielsweise Beton oder Metall verschlossen werden kann, so dass dadurch insgesamt der abgeschlossene Flüssigkeits-Sammelbehälter 7 zur Verfügung steht.

Die Baueinheit 2, 4, 5, 6, 8 und der Flüssigkeits-Sammelbehälter 7 werden folglich durch die Trennwand 9 im Abwasserschacht 1 voneinander separiert. Außerdem ist in der besagten Trennwand 9 wenigstens eine Schnittstelle 11, 12 vorgesehen. Bei der Schnittstelle 11, 12 handelt es sich um ein Rohrverbindungsstück oder eine Rohrkupplung in Verbindung mit Dichtungen falls erforderlich. Zusätzlich können auch Flansche und/oder Adapter als Bestandteile der Schnittstelle 11, 12 vorgesehen werden.

Bei dem Ausführungsbeispiel nach der Fig. 6 ist eine Trennwand 9 im Innern des dortigen Abwasserschachtes 1 nicht vorgesehen. Vielmehr finden sich im Innern des Abwasserschachtes 1 zwei (oder auch mehr) Flüssigkeits-Sammelbehälter 7, die in diesem Fall jeweils als Behälter aus Metall ausgebildet sind oder sein können. Die beiden Flüssigkeits-Sammelbehälter 7 lassen sich miteinander verbinden. Insofern ist erneut ein wechselweiser Betrieb der beiden Baueinheiten 2, 4, 5, 6, 8 genau so möglich, wie bereits mit Bezug zu den Ausführungsbeispielen nach den Fig. 4 und 5 beschrieben wurde.

Im Rahmen des Ausführungsbeispiels sind die Baueinheit 2, 4, 5, 6, 8 und der Flüssigkeits-Sammelbehälter 7 über die Schnittstelle 11 miteinander gekoppelt, und zwar bauseitig, Das heißt, die Verbindung zwischen der Baueinheit 2, 4, 5, 6, 8 und dem Flüssigkeits-Sammelbehälter 7 über die Schnittstelle 11 erfolgt erst am Einbauort. Nämlich dann, wenn die Baueinheit 2, 4, 5, 6, 8 im Abwasserschacht 1 platziert wird, um über die Schnittstelle 11 mit dem bauseitig bereits vorhandenen Flüssigkeits-Sammelbehälter 7 gekoppelt zu werden.

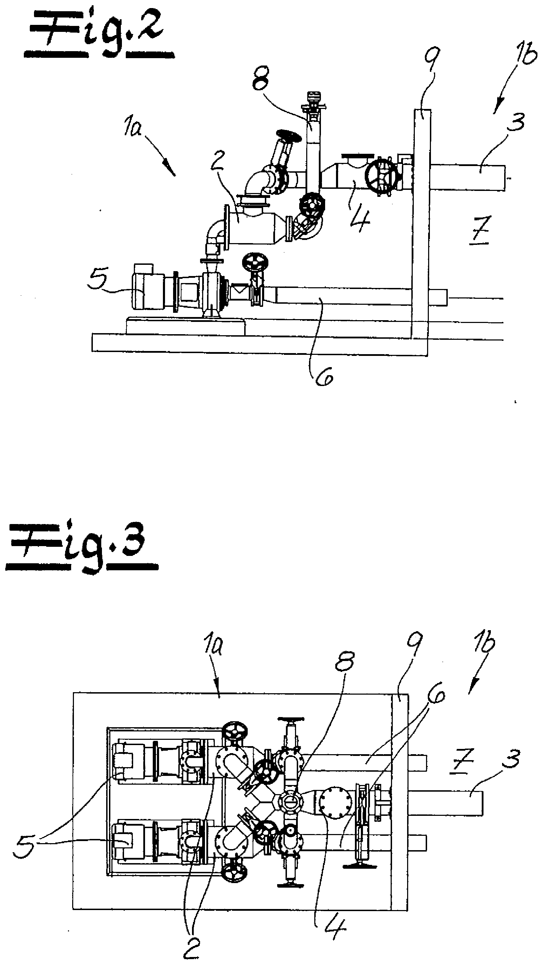

Die Schnittstelle 12 dient demgegenüber zur Kopplung des Zulaufes bzw. der Zulaufleitung 3 mit dem Verteiler 4 bzw. den beiden Sperrstoff-Sammelbehältern 2. Auf diese Weise ist es möglich, dass der Zulauf bzw. die Zulaufleitung 3 durch den Flüssigkeits-Sammelbehälter 7 hindurchgeführt werden kann, wie dies insbesondere anhand der Fig. 2 und 5 unmittelbar deutlich wird. Als Folge hiervon kann der Abwasserschacht 1 mit einer nur geringen Bauhöhe realisiert werden, weil die Zulaufhöhe zu der Baueinheit 2, 4, 5, 6, 8 im Rahmen der Erfindung gegenüber dem Stand der Technik deutlich reduziert ist.

Die Baueinheit 2, 4, 5, 6, 8 ist insgesamt aus Metall, beispielsweise aus Edelstahl, gefertigt. Grundsätzlich lässt sich im Rahmen der Erfindung aber auch Kunststoff als möglicher Werkstoff einsetzen. Demgegenüber ist der Abwasserschacht 1 und mit ihm größtenteils der Flüssigkeits-Sammelbehälter 7 insgesamt aus Beton gefertigt. Die entfernbare Abdeckung 10 mag aus Metall bestehen und hergestellt sein.

Wie einleitend bereits erläutert, wird die Baueinheit 2, 4, 5, 6, 8 werkseitig bzw. herstellerseitig vorgefertigt und zum Einbauort transportiert. Am Einbauort findet sich bauseitig und erfindungsgemäß nicht nur der Abwasserschacht 1, sondern ist zusätzlich auch der Flüssigkeitsbehälter 7 bereits vorhanden. Zu diesem Zweck wird im Ausführungsbeispiel nach den Fig. 4 und 5 die Trennwand 9 im Abwasserschacht 1 gegründet und kann abschließend der solchermaßen definierte Flüssigkeits-Sammelbehälter 7 durch die entfernbare Abdeckung 10 verschlossen werden. Das mag druckdicht erfolgen. Eine druckdichte Auslegung beobachtet man auch bei den beiden Flüssigkeitsbehältern 7 nach Fig. 6, die ebenfalls bauseitig bereits im Abwasserschacht 1 vorhanden sind und mit der werkseitig bzw. herstellerseitig vorgefertigten Baueinheit 2, 4, 5, 6, 8 am Einbauort vereinigt werden.

## Patentansprüche

1. Verfahren zum Erstellen einer Abwasserhebeanlage in einem Abwasserschacht (1), wonach wenigstens ein Sperrstoff-Sammelbehälter (2) für hierdurch geführtes und mit Sperrstoffen belastetes Abwasser, ein Flüssigkeits-Sammelbehälter (7) für das von Sperrstoffen befreite und in dem Sperrstoff-Sammelbehälter (2) vorgereinigte Abwasser und eine dem Sperrstoff-Sammelbehälter (2) zugeordnete Pumpe (5) zur Entleerung des Flüssigkeits-Sammelbehälters (7) über den Sperrstoff-Sammelbehälter (2) als getrennte Baugruppen hergestellt werden, wobei
- wenigstens der Sperrstoff-Sammelbehälter (2) und die Pumpe (5) als Baueinheit (2, 4, 5, 6, 8) herstellerseitig oder werkseitig vorgefertigt und zum Einbauort transportiert werden und
- die betreffende Baueinheit (2, 4, 5, 6, 8) mit dem am Einbauort bauseitig bereits vorhandenen Flüssigkeits-Sammelbehälter (7) im Zuge des Einbaus in den ebenfalls bauseitig bereits vorhandenen Abwasserschacht (1) vereinigt wird, wonach
- die Baueinheit (2, 4, 5, 6, 8) und der Flüssigkeits-Sammelbehälter (7) über wenigstens eine als Rohrkupplung ausgebildete Schnittstelle (11, 12) miteinander bauseitig, das heißt am Einbauort, gekoppelt werden, wonach ferner
- die Baueinheit (2, 4, 5, 6, 8) und der Flüssigkeits-Sammelbehälter (7) durch eine Trennwand (9) im Abwasserschacht (1) voneinander separiert werden und
- die Trennwand (9) den Abwasserschacht (1) in einen Trockenraum (1a) mit der dort vorhandenen Baueinheit (2, 4, 5, 6, 8) und einen Nassraum (1b) mit dem dort vorgesehenen Flüssigkeits-Sammelbehälter (7) unterteilt, **dadurch gekennzeichnet, dass**
die Schnittstelle (11, 12) in der Trennwand (9) angebracht wird.

2. Verfahren nach Anspruch 1, **dadurch gekennzeichnet, dass** der Flüssigkeits-Sammelbehälter (7) bauseitig in den Abwasserschacht (1) integriert wird.

3. Verfahren nach Anspruch 1 oder 2, **dadurch gekennzeichnet, dass** der Flüssigkeits-Sammelbehälter (7) und der Abwasserschacht (1) materialeinheitlich hergestellt werden.

4. Verfahren nach einem der Ansprüche 1 bis 3, **dadurch gekennzeichnet, dass** ein Zulauf (3) für die Baueinheit (2, 4, 5, 6, 8) durch den Flüssigkeits-Sammelbehälter (7) hindurchgeführt wird.

5. Verfahren nach einem der Ansprüche 1 bis 4, **dadurch gekennzeichnet, dass** die Baueinheit (2, 4, 5, 6, 8) einerseits und der Abwasserschacht (1) sowie gegebenenfalls der Flüssigkeits-Sammelbehälter (7) andererseits aus verschiedenen Materialien, beispielsweise Metall, Kunststoff und Beton sowie Kombinationen hergestellt werden.

## Claims

1. Method for setting up a wastewater pumping station in a wastewater shaft (1), according to which method at least one solids collecting tank (2) for wastewater which is guided through the same and is loaded with solids, a liquid collecting tank (7) for the wastewater which has been rid of solids and has been pretreated in the solids collecting tank (2) and a pump (5) which is assigned to the solids collecting tank (2) for emptying the liquid collecting tank (7) via the solids collecting tank (2) are produced as separate assemblies,
wherein
- at least the solids collecting tank (2) and the pump (5) are prefabricated by the manufacturer or at the factory as a construction unit (2, 4, 5, 6, 8) and transported to the installation site and
- the relevant construction unit (2, 4, 5, 6, 8) is combined with the liquid collecting tank (7), which is already present on site at the installation site, in the course of the installation in the wastewater shaft (1), which is also already present on site,
according to which method
- the construction unit (2, 4, 5, 6, 8) and the liquid collecting tank (7) are coupled together on site, i.e. at the installation site, by means of at least one interface (11, 12) configured as a tube coupling, according to which method furthermore
- the construction unit (2, 4, 5, 6, 8) and the liquid collecting tank (7) are separated from one another in the wastewater shaft (1) by a partition wall (9) and
- the partition wall (9) divides the wastewater shaft (1) into a dry chamber (1a) with the construction unit (2, 4, 5, 6, 8) that is present there and a wet chamber (1b) with the liquid collecting tank (7) that is provided there, **characterized in that**
the interface (11, 12) is mounted in the partition wall (9) .

2. Method according to Claim 1, **characterized in that** the liquid collecting tank (7) is integrated into the wastewater shaft (1) on site.

3. Method according to Claim 1 or 2, **characterized in that** the liquid collecting tank (7) and the wastewater shaft (1) are produced from uniform materials.

4. Method according to one of Claims 1 to 3, **characterized in that** an intake (3) for the construction unit (2, 4, 5, 6, 8) is conducted through the liquid collecting tank (7).

5. Method according to one of Claims 1 to 4, **characterized in that** the construction unit (2, 4, 5, 6, 8), on the one side, and the wastewater shaft (1) as well as, where applicable, the liquid collecting tank (7), on the other side, are produced from different materials, for example metal, plastics material and concrete as well as from combinations.

## Revendications

1. Procédé d'établissement d'un système de relevage des eaux usées dans un regard d'égout (1), selon lequel au moins un récipient collecteur de déchets (2) pour les eaux usées passant à travers celui-ci et chargées en déchets, un récipient collecteur de liquide (7) pour les eaux usées débarrassées des déchets et pré-épurées dans le récipient collecteur de déchets (2) et une pompe (5) associée au récipient collecteur de déchets (2) et servant à vider le récipient collecteur de liquide (7) par le biais du récipient collecteur de déchets (2) sont fabriqués sous la forme de sous-ensembles séparés,
- au moins le récipient collecteur de déchets (2) et la pompe (5) sont préfabriqués sous la forme d'un module (2, 4, 5, 6, 8) par le fabricant ou en usine et sont transportés jusqu'au lieu d'installation et
- le module (2, 4, 5, 6, 8) concerné est réuni avec le récipient collecteur de liquide (7), déjà présent du côté du chantier sur le lieu d'installation, dans le cadre de l'installation dans le regard d'égout (1) lui aussi déjà présent sur le chantier,
après quoi
- le module (2, 4, 5, 6, 8) et le récipient collecteur de liquide (7) sont accouplés l'un à l'autre sur le chantier, c'est-à-dire sur le lieu d'installation, par le biais d'au moins une interface (11, 12) réalisée sous la forme d'un accouplement tubulaire, après quoi en plus
- le module (2, 4, 5, 6, 8) et le récipient collecteur de liquide (7) sont séparés l'un de l'autre par une paroi de séparation (9) dans le regard d'égout (1) et
- la paroi de séparation (9) subdivise le regard d'égout (1) en un espace sec (1a) dans lequel se trouve le module (2, 4, 5, 6, 8) et un espace mouillé (1b) dans lequel se trouve le récipient collecteur de liquide (7), **caractérisé en ce que**
l'interface (11, 12) est incorporée dans la paroi de séparation (9).

2. Procédé selon la revendication 1, **caractérisé en ce que** le récipient collecteur de liquide (7) est intégré sur chantier dans le regard d'égout (1).

3. Procédé selon la revendication 1 ou 2, **caractérisé en ce que** le récipient collecteur de liquide (7) et le regard d'égout (1) sont fabriqués en un seul matériau.

4. Procédé selon l'une des revendications 1 à 3, **caractérisé en ce qu'**une arrivée (3) pour le module (2, 4, 5, 6, 8) passe à travers le récipient collecteur de liquide (7).

5. Procédé selon l'une des revendications 1 à 4, **caractérisé en ce que** le module (2, 4, 5, 6, 8) d'une part et le regard d'égout (1) et éventuellement aussi le récipient collecteur de liquide (7) d'autre part sont fabriqués dans des matériaux différents, par exemple du métal, une matière plastique et du béton ainsi que des combinaisons.
